# EUROPEAN PATENT APPLICATION

(11) **EP 4 485 669 A1**
(43) Date of publication of application: **01.01.2025**
(21) Application number: 22962481.2
(22) Date of filing: 21.10.2022
(51) Int. Cl.: H01M 50/502, H01M 50/298, H01M 50/296, H01M 50/289

(54) **BATTERY AND ELECTRIC DEVICE**

(71) Applicant: Contemporary Amperex Technology Co., Limited, Ningde, Fujian 352100 (CN)
(72) Inventor: LIN, Xinwei, Ningde, Fujian 352100 (CN); LI, Lingyu, Ningde, Fujian 352100 (CN)
(74) Representative: Ziebig Hengelhaupt Intellectual Property Attorneys Patentanwaltskanzlei PartGmbB
(86) International application number: PCT/CN2022/126812
(87) International publication number: WO 2024/082299

(57) **Abstract**

Embodiments of the present application provides a battery and an electrical device, belonging to the field of battery technology. The battery includes a box, a battery cell group, a separation beam, a fixed base and an output electrode; the battery cell group is provided in the box, and the battery cell group includes a plurality of battery cells which are stacked in a first direction and electrically connected to each other; the separation beam is fixed in the box, and the separation beam is located at one side of the battery cell group in the first direction; the fixed base is installed on the separation beam; the output electrode is used to output the electric energy of the battery cell group, the output electrode is fixed to the fixed base. The battery has higher energy density.

## Description

### Technical Field

The present application relates to the field of battery technology, and specifically, to a battery and an electrical device.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery technology is an important factor related to their development.

In the development of battery technology, in addition to improving battery safety, energy density is also an issue that cannot be ignored. Therefore, how to improve the energy density of the battery is an urgent technical problem that needs to be solved in battery technology.

### Summary

An object of the present application is to provide a battery and an electrical device. The battery has a relatively high energy density.

The present application is realized through the following technical solutions.

In a first aspect, the present application provides a battery, which includes a box, a battery cell group, a separation beam, a fixed base and an output electrode; the battery cell group is provided in the box, and the battery cell group includes a plurality of battery cells which are stacked in a first direction and electrically connected to each other; the separation beam is fixed in the box, and the separation beam is located at one side of the battery cell group in the first direction; the fixed base is installed on the separation beam; the output electrode is used to output the electric energy of the battery cell group, the output electrode is fixed to the fixed base.

In the battery according to the embodiment of the present application, the separation beam is a component provided in the box for dividing the internal space of the box. The output electrode of the battery cell group is fixed to the fixed base, and the fixed base is installed on the separation beam, which can improve the space utilization rate inside the box, thus allowing the battery to have a higher energy density.

According to some embodiments of the present application, the box includes a bottom wall and a side wall, the side wall surrounds the bottom wall, the separation beam is provided on the bottom wall, the separation beam extends in the second direction, and any two of the second direction, the first direction and the thickness direction of the bottom wall intersect each other.

In the above solution, the side wall and the bottom wall define a space for accommodating the battery cell group, and the separation beam is arranged on the bottom wall to enable stable connection between the separation beam and the box, so as to facilitate fixing of the fixed base to the separation beam; and the separation beam extends in the second direction, and the size of the separation beam in the first direction may be relatively small to reduce space occupation.

According to some embodiments of the present application, the separation beam includes a first surface away from the bottom wall, the separation beam is provided with a groove recessed from the first surface toward the bottom wall, and the fixed base is at least partially disposed in the groove.

In the above solution, the groove provides a space for the accommodating fixed base, and the fixed base is at least partially disposed in the groove, which can reduce the space occupied by the fixed seat in the thickness direction of the bottom wall after being assembled with the separation beam, and reduce the influence of the fixed base on the space utilization rate.

According to some embodiments of the present application, the fixed base does not protrude from the first surface.

In the above solution, after the fixed base is installed on the dividing beam, the fixed base does not occupy additional space in the thickness direction of the bottom wall, reducing the space occupation in the box and reducing the influence on the energy density of the battery.

According to some embodiments of the present application, the fixed base includes a first connection hole, and the groove bottom surface of the groove is provided with a second connection hole corresponding to the first connection hole. The battery further includes a first fastener, and the first fastener is configured to be inserted into the first connection hole and the second connection hole to fix the fixed base to the groove bottom surface.

In the above solution, the first connection hole is corresponding to the second connection hole, the first fastener is inserted into the first connection hole and the second connection hole, and the fixed base is fixed on the groove bottom surface, enabling convenient assembling and easy operate.

According to some embodiments of the present application, the fixed base includes a base body and a connection part, the output electrode is fixed to the base body, the connection part is connected to the base body, and the first connection hole is provided in the connection part.

In the above solution, the output electrode is fixed to the base body, and the connection part is connected to the separation beam, which facilitates the assembly of the output electrode and the fixed base, and the assembly of the fixed base and the separation beam, and makes the assembly of the output electrode and the separation beam stable.

According to some embodiments of the present application, the fixed base further includes a first positioning part, the separation beam includes a second positioning part corresponding to the first positioning part, and the first positioning part cooperates with the second positioning part.

In the above solution, the first positioning part cooperates with the second positioning part, and the first connection hole of the connection part cooperates with the second connection hole of the separation beam, which facilitates the positioning and assembling of the fixed base and the separation beam, and can also limit the rotation of the fixed base relative to the separation beam.

According to some embodiments of the present application, the base body includes a second surface facing the groove bottom surface, the first positioning part is a protrusion protruding from the second surface, and the second positioning part is a first concave part provided at the groove bottom surface.

In the above solution, the first positioning part is a protrusion, the second positioning part is a first concave part, and the protrusion cooperates with the first concave part, enabling simple structure, convenient assembly and convenient operation.

According to some embodiments of the present application, the fixed base further includes a nut, which is embedded in the base body, and the output electrode is provided with a third connection hole. The battery further includes a second fastener, and the second fastener passes through the third connection hole and is in threaded connection with the nut to fix the output electrode to the fixed base.

In the above solution, the nut is embedded in the base body, enabling stable connection between the nut and the base body, so that the second fastener can pass through the third connection hole and be threadedly connected with the nut, to make the output electrode fixed to the fixed base; and the second fastener fixes the output electrode to the fixed base to facilitate electrical connection between the output electrode and an external conductive part (such as conductive sheet).

According to some embodiments of the present application, the base body and the connection part are arranged in the second direction.

In the above solution, the base body and the connection part are arranged in the second direction, so that the structural space of the separation beam may be used to reduce the space occupied by the fixed base in the first direction, enabling higher space utilization rate in the box and further high energy density of the battery.

According to some embodiments of the present application, the output electrode includes a first section and a second section. The first section and the second section are connected to form an L-shaped structure. The first section is electrically connected to one battery cell in the battery cell group closest to the separation beam, and the second section is fixed to the fixed base.

In the above solution, the first section and the second section are connected to form an L-shaped structure, facilitating the output electrode being connected with the battery cell group and the fixed base and enabling convenient assembly.

According to some embodiments of the present application, in the first direction, the first section is located between the battery cell group and the separation beam, the length direction of the first section is parallel to the thickness direction of the bottom wall, and the second section is connected to one end of the first section away from the bottom wall.

In the above solution, the first section is located between the battery cell group and the separation beam in the first direction, reasonably utilizing the space in the first direction to facilitate the electrical connection between the output electrode and the battery cell group; and the second section is connected to one end of the first section away from the bottom wall, facilitating the assembly of the fixed base and the separation beam.

According to some embodiments of the present application, the battery cell includes a housing and an electrode terminal, the housing has a first wall facing the separation beam, the electrode terminal is installed on the first wall, the electrode terminal has a first side surface, and the plane where the first side surface is located intersects the first wall, and the output electrode is connected to the first side surface of the electrode terminal of the battery cell in the battery cell group closest to the separation beam.

In the above solution, the output electrode is connected to the first side surface of the electrode terminal. On the one hand, it facilitates the connection between the output electrode and the electrode terminal; and on the other hand, it can reduce the space occupied by the output electrode in the first direction after being assemled with the battery cell group, enabling high space utilization rate inside the box and high energy density of the battery.

According to some embodiments of the present application, the output electrode further includes a third section, the third section extends out from an edge of the first section in the width direction, the third section is connected to the first side surface, and the width direction of the first section intersects the first direction.

In the above solution, the third section extends out from the edge of the first section in the width direction, facilitating processing and manufacturing; and the third section is connected to the third surface, facilitating the connection between the output electrode and the battery cell group.

According to some embodiments of the present application, the fixed base includes a first limiting part, and the first limiting part abuts against the third section in the thickness direction of the bottom wall, to limit the movement of the third section in the thickness direction of the bottom wall.

In the above solution, the movement of the third section in the thickness direction of the bottom wall is limited by the first limiting part, so as to enable stable connection between the output electrode and the fixed base and reduce the risk of the output electrode being detached from the fixed base.

According to some embodiments of the present application, the first limiting part is located at a side of the third section facing away from the bottom wall.

In the above solution, the first limiting part is located on the side of the third section facing away from the bottom wall to limit the movement of the output electrode in the direction away from the bottom wall, in the thickness direction of the bottom wall, and the fixed base is installed on the separation beam and cooperates with it to constrain the movement of the output electrode in the thickness direction of the bottom wall, further enabling stable assembly of the output electrode and the fixed base. With this arrangement, the output electrode and the fixed base can be assembled in advance to reduce the assembly difficulty.

According to some embodiments of the present application, the housing includes a first wall and a second wall oppositely arranged in the first direction, a third wall and a fourth wall oppositely arranged in the second direction, and a fifth wall and a sixth wall oppositely arranged in the thickness direction of the bottom wall. The area of the third wall and the area of the fourth wall are both smaller than the area of the first wall. The area of the third wall and the area of the fourth wall are both smaller than the area of the second wall. The area of the fifth wall and the area of the sixth wall are both smaller than the area of the first wall, and the area of the fifth wall and the area of the sixth wall are both smaller than the area of the second wall.

In the above solution, the first wall and the second wall are walls of the housing with relatively large areas, and multiple battery cells are arranged in the first direction, so that the battery cell group has a compact structure and the battery has a large energy density.

According to some embodiments of the present application, the housing further has a second wall disposed opposite to the first wall, wherein a first region of an edge of the second wall is recessed to form a second concave part, and the second concave part is used to accommodate the electrode terminal of the battery cell adjacent to the second wall.

In the above solution, when multiple battery cells are stacked, the configuraiotn of the second concave part enables accommodation of the electrode terminal of the battery cell adjacent to the second wall, making reasonable use of the assembly space, so that the battery has a higher energy density.

According to some embodiments of the present application, the fixed base includes the base body and an extension part extending from the base body toward the bottom wall, and in the first direction, the extension part is located between the first section and the separation beam.

In the above solution, the extension part is located between the first section and the separation beam, to isolate the first section from the separation beam and reduce the risk of the output electrode being in contact with the separation beam. For example, the fixed base is an insulation element, which can improve the effect of insulating the output electrode from the separation beam.

According to some embodiments of the present application, the fixed base includes a second limiting part, and the second limiting part is used to limit the movement of the first section in the width direction of the first section.

In the above solution, the second limiting part limits the movement of the first section in the width direction of the first section, enabling stable assembly of the output electrode and the fixed base.

According to some embodiments of the present application, the second limiting part includes at least two snaps, and the at least two snaps are respectively snap-fitted with two sides of the first section in the width direction.

In the above solution, the configuration of the snaps enables simple structure, which facilitates the assembly of the first section and the second limiting part.

According to some embodiments of the present application, an insulation layer is provided between the battery cell group and the separation beam.

In the above solution, the arrangement of the insulation layer enables a better insulation effect between the battery cell group and the separation beam, thereby reducing the risk of short circuit caused by contact between the battery cell group and the separation beam.

In a second aspect, the present application further provides an electrical device, including at least one battery provided in any of the above embodiments.

The above description is only an overview of the technical solutions of the present application. In order to have a clearer understanding of the technical means of the present application so that they can be implemented according to the content of the description, and in order to make the above and other purposes, features and advantages of the present application more obvious and understandable, the embodiments of the present application are specifically listed below.

### Brief Description of Drawings

In order to illustrate the technical solutions of the embodiments of the present application more clearly, the drawings required to be used in the embodiments of the present application will be briefly introduced below. Obviously, the drawings described below are only some embodiments of the present application. Those of ordinary skill in the art can also obtain other drawings based on the drawings without paying creative efforts.
FIG. 1 is a schematic structural diagram of a vehicle provided by some embodiments of the present application;
FIG. 2 is an exploded view of a battery provided by some embodiments of the present application;
FIG. 3 is a partial structural schematic diagram of a battery provided by some embodiments of the present application;
FIG. 4 is a local enlarged view of part A of FIG. 3;
FIG. 5 is a partial structure schematic diagram of a battery provided by some embodiments of the present application;
FIG. 6 is a local enlarged view of part B of FIG. 5;
FIG. 7 is a schematic diagram showing assembly of an output electrode and a fixed base provided by some embodiments of the present application;
FIG. 8 is a schematic structural diagram of the output electrode and the fixed base provided by some embodiments of the present application;
FIG. 9 is a schematic diagram showing assembly of the output electrode and the battery cell group provided by some embodiments of the present application;
FIG. 10 is a schematic structural diagram of the battery cell and the output electrode provided by some embodiments of the present application;
FIG. 11 is a schematic diagram showing assembly of a first side surface and a first wall provided by some embodiments of the present application; and
FIG. 12 is a local enlarged view of part C of FIG. 3.

In the drawings, the drawings are not drawn to actual scale.

Reference signs: 100-battery; 10-box; 11-first sub-box; 111-bottom wall; 112-side wall; 12-second sub-box; 20-battery cell group; 21-battery cell; 211-housing; 2111-first wall; 2112-second wall; 2113-second concave part; 212-electrode terminal; 2121-first side surface; 30-separation beam; 31-first surface; 32-groove; 321-groove bottom surface; 322-second connection hole; 323-second positioning part; 40-fixed base; 41-base body; 411-second surface; 42-connection part; 421-first connection hole; 43-first positioning part; 44-nut; 45-first limiting part; 46-extension part; 47-second limiting part; 471-snap; 50-output electrode; 51-first section; 52-second section; 521-third connection hole; 53-third section; 60-first fastener; 200-controller; 300-motor; 1000-vehicle.

### Detailed Description of Embodiments

The embodiments of the present application will be described in further detail below with reference to the drawings and examples. The detailed description of the following examples and the drawings are used to illustrate the principles of the present application, but cannot be used to limit the scope of the present application, that is, the present application is not limited to the described examples.

Unless otherwise defined, all technical and scientific terms used herein have the same meanings as commonly understood by those skilled in the prior art of the present application; the terms used herein are for the purpose of describing specific examples only and are not intended to limit the present application; the terms "including" and "having" and any variations thereof in the description and claims of the present application and the above description of the drawings are intended to cover non-exclusive inclusion.

The terms "first", "second", etc. in the description and claims of the present application or the above-mentioned drawings are used to distinguish different objects, rather than to describe a specific order or priority relationship.

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In the description of the present application, it should be indicated that unless otherwise clearly specified and limited, terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

In the present application, "plurality/multiple" means two or more (including two). Similarly, "a plurality of/multiple groups" means two or more groups (including two groups), and ""a plurality of/multiple pieces" means two or more pieces (including two pieces).

The development of battery technology needs to consider various design factors simultaneously, such as safety, discharge capacity, charge and discharge rate, and other performance parameters. In addition, energy density of batteries should also be considered.

The battery includes a box, a separation beam, a battery cell group and end plates arranged at two sides of the battery cell group. The separation beam and the battery cell group are both arranged in the box. The separation beam separates the interior of the box into multiple spaces, and the battery cell group is located in at least one of the multiple spaces obtained by separating by the separation beam.

In the related art, when the battery cell group is provided in a box, two end plates need to be provided at two sides of the battery cell group. The two end plates constrain the multiple battery cells of the battery cell group. Electric energy of the battery cell group is output through the output electrode. In order to facilitate the connection between the output electrode and the external conductive part, the output electrode is fixed to the fixed base. However, the fixed base is usually installed on the end plate; in order to protect multiple battery cells and install the fixed base, the thickness of the end plate is usually large, resulting in lower space utilization rate in the box and lower energy density of the battery.

In view of this, in order to solve the problem of low energy density of the battery caused by low space utilization rate in the box, the inventors designed a battery after in-depth researches, in which the fixed base is installed on the separation beam, and the thickness of the end plate can be reduced, and even the end plate arranged adjacent to the battery cell group can be eliminated to improve the space utilization rate in the box, so that the battery has a higher energy density.

Since the separation beam is an essential component, in the above-mentioned battery, by installing the fixed base on the separation beam, the thickness of the end plate can be reduced or even the use of the end plate can be reduced, thereby improving the space utilization rate in the box, and enabling higher energy density of the battery.

The battery disclosed in the embodiments of the present application can be used in, but is not limited to, vehicles, ships, aircraft or other electrical devices. The battery disclosed in the present application can be used to form a power supply system for the electrical device.

Embodiments of the present application provide an electrical device using the battery as the power supply. The electrical device may be, but is not limited to a mobile phone, a panel computer, a notebook computer, an electric toy, an electric tool, an electric bicycle, an electric motorcycle, an electric vehicle, a ship, a spacecraft or the like. In the above, the electric toy may include a fixed or mobile electric toy, such as a game console, an electric car toy, an electric ship toy, or an electric aircraft toy. The spacecraft includes an airplane, a rocket, a space shuttle, a spaceship, or the like.

For convenient description, the following embodiments are described by taking a vehicle 1000 as an electrical device as example.

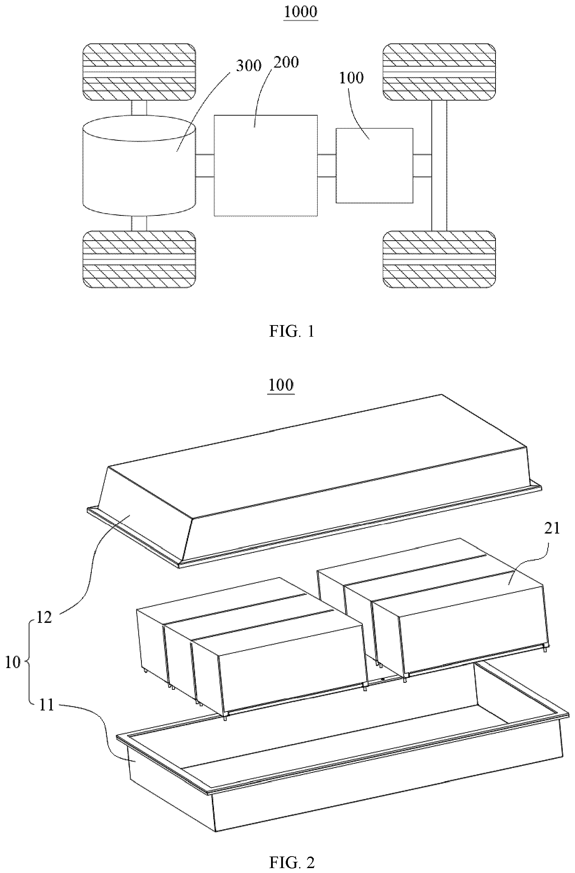

Referring to FIG. 1, FIG. 1 is a schematic structural diagram of a vehicle provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000, for circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

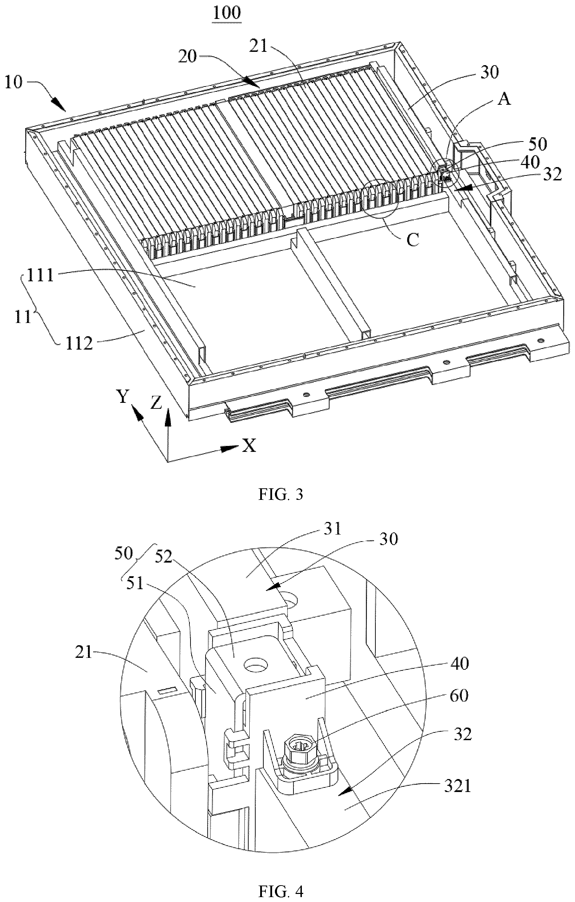

Referring to FIG. 2 and FIG. 3, FIG. 2 is an exploded view of a battery provided by some embodiments of the present application. FIG. 2 only shows the box and the battery cell, with other components omitted; and FIG. 3 is a partial structural schematic diagram of a battery provided by some embodiments of the present application. In order to conveniently observing the components inside the box, FIG. 3 does not show the second sub-box. According to some embodiments of the present application, the present application provides a battery 100. The battery 100 includes a box 10, a battery cell group 20, a separation beam 30, a fixed base 40 and an output electrode 50. The battery cell group 20 is disposed in the box 10. The battery cell group 20 includes a plurality of battery cells 21 stacked in the first direction X and electrically connected to each other. The separation beam 30 is fixed in the box 10, and the separation beam 30 is located at one side of the battery cell group 20 in the first direction X. The fixed base 40 is installed on the separation beam 30. The output electrode 50 is used to output the electric energy of the battery cell group 20, and the output electrode 50 is fixed to the fixed base 40.

In the figures, the direction indicated by the letter X is the first direction. The first direction X may be the length direction of the box 10, or the first direction X may be the width direction of the box 10.

The box 10 is used to provide accommodation space for the battery cells 21, and the box 10 can be in a variety of structures. In some embodiments, the box 10 may include a first sub-box 11 and a second sub-box 12. The first sub-box 11 and the second sub-box 12 cover each other. The first sub-box 11 and the second sub-box 12 jointly define an accommodation space for accommodating the battery cells 21. The first sub-box 11 may be in a hollow structure with one side open, and the second sub-box 12 may be in a plate-like structure. The second sub-box 12 covers the open side of the first sub-box 11, so that the first sub-box 11 and the second sub-box 12 jointly define an accommodation space; and the first sub-box 11 and the second sub-box 12 can also be both in a hollow structure with one side open, and the open side of the first sub-box 11 covers the open side of the second sub-box 12.

The box 10 may be made of a material of aluminum, aluminum alloy, stainless steel, etc., and has high strength.

In the battery 100, the multiple battery cells 21 may be in serial, parallel or hybrid connection with each other. The hybrid connection means that the multiple battery cells 21 are connected with each other both in series and in parallel. The multiple battery cells 21 may also be first directly in serial or in parallel or in hybrid connection with each other, and then the whole formed by the multiple battery cells 21 is accommodated in the box 10. The battery 100 may also include other structures. For example, the battery 100 may further include a bus component for realizing electrical connection between the multiple battery cells 21.

In the above, the battery cell 21 may be a secondary battery or a primary battery; the battery cell 21 may also be a lithium-sulfur battery, a sodium-ion battery or a magnesium-ion battery, but is not limited thereto.

The separation beam 30 is a component disposed inside the box 10. The separation beam 30 is used to divide the interior of the box 10 into multiple spaces. The multiple spaces can respectively accommodate the battery cell group 20 and other components (such as wire harness, etc.). At the same time, the separation beam 30 is disposed in the box 10, which can also improve the overall strength of the box 10.

The position where the separation beam 30 is provided in the box 10 may be various, and different positions may be set according to different requirements. For example, the separation beam 30 may be located at one side of the battery cell group 20 in the first direction X. In some embodiments, when the number of separation beams 30 is large, the battery cell group 20 may be located between two separation beams 30.

The material of the separation beam 30 may be the same as the material of the box 10, or may be different from the material of the box 10. The separation beam 30 may be made of a material of aluminum, aluminum alloy, stainless steel, etc., and has high strength.

The fixed base 40 is a component used to fix the output electrode 50; the fixed base 40 may be an insulation component to reduce the risk of short circuit caused by contact between the output electrode 50 and other conductive parts.

The fixed base 40 and the separation beam 30 may be assembled in various ways. For example, the fixed base 40 may be snap-fitted with the separation beam 30, or the fixed base 40 may be detachably connected with the separation beam 30 through a connection part.

The output electrode 50 is a conductive component and is used to conduct out the electric energy of the battery cell group 20. The the output electrode 50 may be made of a material of copper, aluminum, etc.

In the battery 100 according to the embodiment of the present application, a plurality of battery cells 21 of the battery cell group 20 are stacked in the first direction X, the separation beam 30 is provided on one side of the battery cell group 20 in the first direction X, the output electrode 50 of the battery cell group 20 is fixed to the fixed base 40, and the fixed base 40 is installed on the separation beam 30, which can reduce the thickness of the end plate adjacent to the battery cell group 20, or even eliminate the use of the end plate, thereby improving the space utilization rate within the box 10 and further enabling the battery 100 to have a higher energy density.

Referring to FIG. 3, according to some embodiments of the present application, the box 10 includes a bottom wall 111 and a side wall 112. The side wall 112 surrounds the bottom wall 111. The separation beam 30 is arranged on the bottom wall 111. The separation beam 30 extends in the second direction Y. Any two of the second direction Y, the first direction X, and the thickness direction Z of the bottom wall 111 intersect each other.

In the drawings, the direction indicated by the letter Y is the second direction, and the second direction Y may be the width direction of the box 10, or the second direction Y may also be the length direction of the box 10. The direction indicated by the letter Z is the thickness direction Z of the bottom wall 111, and the thickness direction Z of the bottom wall 111 may be the height direction of the box 10.

Any two of the second direction Y, the first direction X and the thickness direction Z of the bottom wall 111 may intersect each other in various ways. For example, the second direction Y may be perpendicular to the first direction X, and the second direction Y and the first direction X may not be perpendicular to the thickness direction Z of the bottom wall 111; alternatively, the second direction Y may be perpendicular to the thickness direction Z of the bottom wall 111, and the second direction Y and the thickness direction Z of the bottom wall 111 may not be perpendicular to the first direction X; alternatively, the first direction X may be perpendicular to the thickness direction Z of the bottom wall 111, and the first direction X and the thickness direction Z of the bottom wall 111 may not be perpendicular to the second direction Y; alternatively, any two of the second direction Y, the first direction X and the thickness direction Z of the bottom wall 111 are perpendicular to each other.

Optionally, any two of the second direction Y, the first direction X and the thickness direction Z of the bottom wall 111 are perpendicular to each other.

The side wall 112 and the bottom wall 111 define a space for accommodating the battery cell group 20, and the separation beam 30 is provided in the space. The side wall 112 may be disposed at the edge of the bottom wall 111, so that the space enclosed by the side wall 112 and the bottom wall 111 has a larger capacity.

The side wall 112 and the bottom wall 111 may be connected in various ways. For example, the side wall 112 and the bottom wall 111 may be integrally formed. For example, the side wall 112 and the bottom wall 111 may be formed by extruding an aluminum product; or the side wall 112 and the bottom wall 111 may be provided separately and welded together.

The separation beam 30 is disposed on the bottom wall 111, and the separation beam 30 may be welded to the bottom wall 111 to enable stable connection between the separation beam 30 and the bottom wall 111. When the separation beam 30 is welded with the bottom wall 111, the separation beam 30 may be made of the same material as the bottom wall 111 to facilitate the welding of the separation beam 30 and the bottom wall 111.

The separation beam 30 extends in the second direction Y. The size of the separation beam 30 in the second direction Y is larger than the sizes of the separation beam 30 in other directions. The length direction of the separation beam 30 may be parallel to the second direction Y; and the thickness direction of the separation beam 30 may be parallel to the first direction X.

The two opposite ends of the separation beam 30 in the second direction Y may be connected to the side wall 112 respectively, so that the connection area between the separation beam 30 and the box 10 is larger, and the connection between the separation beam 30 and the box 10 is stable. Two ends of the separation beam 30 may be welded to the side wall 112, so that the separation beam 30 is connected with the side wall 112 firmly, improving the overall strength of the box 10.

In the above solution, the side wall 112 and the bottom wall 111 define a space for accommodating the battery cell group 20, and the separation beam 30 is disposed on the bottom wall 111 to make the connection between the separation beam 30 and the box 10 stable, so as to facilitate fixing the fixed base 40 to the separation beam 30; and the separation beam 30 extends in the second direction Y, and the size of the separation beam 30 in the first direction X may be smaller to reduce space occupation.

Referring to FIG. 3 and further FIG. 4, FIG. 4 is a local enlarged view of part A of FIG. 3. According to some embodiments of the present application, the separation beam 30 includes a first surface 31 away from the bottom wall 111, the separation beam 30 is provided with a groove 32 recessed from the first surface 31 toward the bottom wall 111, and the fixed base 40 is at least partially disposed in the groove 32.

The first surface 31 is a surface of the separation beam 30 away from the bottom wall 111. The separation beam 30 further includes a third surface (not shown in the drawings) facing the bottom wall 111. The third surface is provided opposite to the first surface 31 in the thickness direction Z of the bottom wall 111. The third surface may be in contact with the bottom wall 111, to enable the bottom wall 111 to have a better supporting effect on the separation beam 30.

The groove 32 is a groove formed by the first surface 31 being recessed toward the bottom wall 111, and the groove depth direction of the groove 32 is from the first surface 31 to the bottom wall 111. The contour of the groove 32 is similar to the contour of the fixed base 40, so that at least part of the fixed base 40 can be accommodated in the groove 32.

The assembly method of the fixed base 40 and the groove 32 may be selected according to the actual situation. For example, a part of the fixed base 40 may be disposed in the groove 32, or the entire fixed base 40 may be disposed in the groove 32.

In the above solution, the groove 32 provides a space for accommodating the fixed base 40, and the fixed base 40 is at least partially disposed in the groove 32, which can reduce the space occupied by the fixed seat 40 in the thickness direction Z of the bottom wall 111 after being assembled with the separation beam 30, and reduce the influence of the fixed base 40 on the space utilization rate.

Referring to FIG. 4, according to some embodiments of the present application, the fixed base 40 does not protrude from the first surface 31.

That the fixed base 40 does not protrude from the first surface 31 means that in the thickness direction Z of the bottom wall 111, the fixed base 40 does not protrude from the first surface 31, specifically that after the fixed base 40 is assembled on the separation beam 30, the whole fixed base 40 is located in the groove 32, and the surface of the fixed base 40 away from the bottom wall 111 is lower than the first surface 31, or the surface of the fixed base 40 away from the bottom wall 111 is coplanar with the first surface 31.

In the above solution, after the fixed base 40 is installed on the separation beam 30, the fixed base 40 does not occupy additional space in the thickness direction Z of the bottom wall 111, reducing the space occupation in the box 10 and reducing the influence on the energy density of the battery 100.

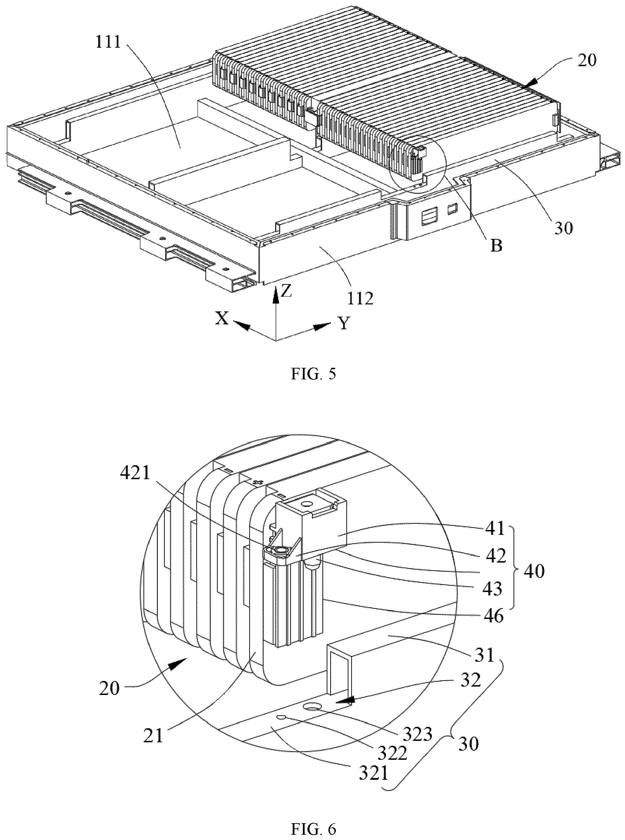

Referring to FIG. 4 and further FIG. 5 and FIG. 6, FIG. 5 is a partial structure schematic diagram of a battery provided by some embodiments of the present application; and FIG. 6 is a local enlarged view of part B of FIG. 5. According to some embodiments of the present application, the fixed base 40 includes a first connection hole 421, the groove bottom surface 321 of the groove 32 is provided with a second connection hole 322 corresponding to the first connection hole 421. The battery 100 further includes a first fastener 60. The first fastener 60 is configured to be inserted into the first connection hole 421 and the second connection hole 322 to fix the fixed base 40 to the groove bottom surface 321.

The first connection hole 421 is a hole provided in the fixed base 40; the first connection hole 421 may be a through hole, and the first connection hole 421 is used for allowing the first fastener 60 to be inserted thereinto.

The second connection hole 322 is a hole provided on the groove bottom surface 321 of the groove 32. The second connection hole 322 is provided corresponding to the first connection hole 421, so that the first fastener 60 can be inserted into the first connection hole 421 and the second connection hole 322.

The second connection hole 322 may be a threaded hole, and the first fastener 60 may be a threaded component (such as a bolt, etc.). When the first fastener 60 is inserted into the first connection hole 421 and the second connection hole 322, the first fastener 60 may be threadedly engaged with the second connecting hole 322 to fix the fixed base 40 to the groove bottom surface 321 of the groove 32.

In order to facilitate the assembly of the fixed base 40 and the separation beam 30, the fixed base 40 may be fitted with the bottom surface 321 of the groove 32.

In the above solution, the first connection hole 421 is corresponding to the second connection hole 322, the first fastener 60 is inserted into the first connection hole 421 and the second connection hole 422, and the fixed base 40 is fixed on the groove bottom surface 321, enabling convenient assembling and easy operate.

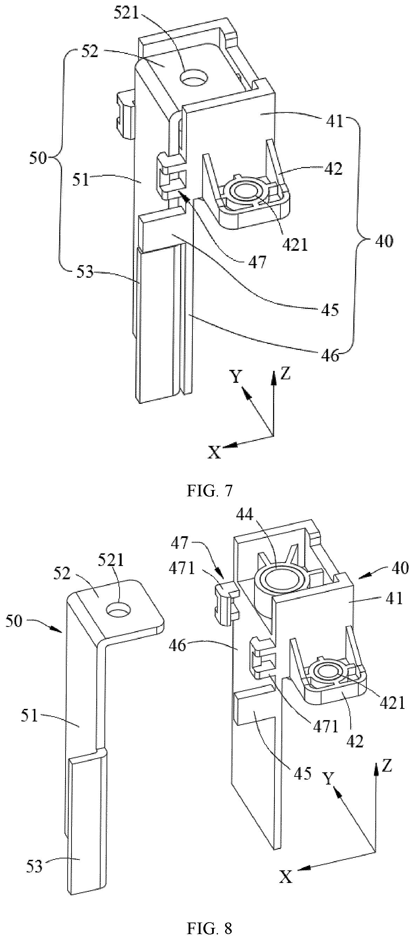

Referring to FIG. 7, FIG. 7 is a schematic diagram showing assembly of an output electrode and a fixed base provided by some embodiments of the present application; and FIG. 8 is a schematic structural diagram of the output electrode and the fixed base provided by some embodiments of the present application, FIG. 8 being the exploded view of FIG. 7. According to some embodiments of the present application, the fixed base 40 includes a base body 41 and a connection part 42, the output electrode 50 is fixed to the base body 41, the connection part 42 is connected to the base body 41, and the first connection hole 421 is provided in the connection part 42.

The base body 41 and the connection part 42 are two constituent parts of the fixed base 40. The base body 41 is used to fix the output electrode 50, and the connection part 42 is used to be connected to the separation beam 30.

The connection part 42 may be connected with the base body 41 in various ways. For example, the connection part 42 may be integrally formed on the base body 41; or the connection part 42 and the base body 41 may be provided separately and fixed together, for example, the connection part 42 is snap-fitted with the base body 41, and the connection part 42 is riveted with the base body 41.

The first connection hole 421 is a through hole provided in the connection part 42, to facilitate connection and cooperation between the connection part 42 and the groove bottom surface 321 of the groove 32. The connection part 42 may have a surface facing the groove bottom surface 321 of the groove 32, so that the connection part 42 may be fitted with the groove bottom surface 321 of the groove 32.

In the above solution, the output electrode 50 is fixed to the base body 41, and the connection part 42 is connected to the separation beam 30, which facilitates the assembly of the output electrode 50 and the fixed base 40, and the assembly of the fixed base 40 and the separation beam 30, and makes the assembly of the output electrode 50 and the separation beam 30 stable.

Referring to FIG. 6, according to some embodiments of the present application, the fixed base 40 further includes a first positioning part 43, the separation beam 30 includes a second positioning part 323 corresponding to the first positioning part 43, and the first positioning part 43 cooperates with the second positioning part 323.

The first positioning part 43 is a portion of the fixed base 40 for positioning and cooperating with the separation beam 30. The second positioning part 323 is a portion of the separation beam 30 for cooperating with the first positioning part 43 of the fixed base 40.

The first positioning part 43 may cooperate with the second positioning part 323 in various ways. For example, the first positioning part 43 may cooperate with the second positioning part 323 in a way of a protrusion being inserted into a concave part. That is, one of the first positioning part 43 and the second positioning part 323 is a protrusion, and the other is a concave part; alternatively, the first positioning part 43 may cooperate with the second positioning part 323 in a way of a snap being snapped into a slot. That is, one of the first positioning part 43 and the second positioning part 323 is a snap, and the other is a slot.

In the above solution, the first positioning part 43 cooperates with the second positioning part 323, and the first connection hole 421 of the connection part 42 cooperates with the second connection hole 322 of the separation beam 30, which facilitates the positioning and assembling of the fixed base 40 and the separation beam 30, and can also limit the rotation of the fixed base 40 relative to the separation beam 30.

Referring to FIG. 6, according to some embodiments of the present application, the base body 41 includes a second surface 411 facing the bottom surface 321, the first positioning part 43 is a protrusion protruding from the second surface 411, and the second positioning part 323 is a first concave part provided at the groove bottom surface 321.

The second surface 411 is the surface of the base body 41 facing the groove bottom surface 321. The second surface 411 can be fitted with the groove bottom surface 321 of the groove 32, to facilitate the positioning and cooperating of the base body 41 and the groove 32.

The first positioning part 43 is a protrusion protruding from the second surface 411, and the second positioning part 323 is a first concave part provided at the groove bottom surface 321 of the groove 32, the first concave part being formed by the groove bottom surface 321 being recessed toward the bottom wall 111. The contour of the first concave part matches the contour of the protrusion, so that the protrusion can be inserted into the first concave part. When the fixed base 40 is positioned and cooperates with the separation beam 30, the protrusion is inserted into the first concave part, to realize the positioning of the fixed base 40 and the separation beam 30. Then, the first connection hole 421 and the second connection hole 322 are made to be corresponding to each other, and the first fastener 60 is inserted into the first connection hole 421 and the second connection hole 322 to complete the assembly of the fixed base 40 and the separation beam 30.

In the above solution, the first positioning part 43 is a protrusion, the second positioning part 323 is a first concave part, and the protrusion cooperates with the first concave part, enabling simple structure, convenient assembly and convenient operation.

Referring to FIG. 7 and FIG. 8, according to some embodiments of the present application, the fixed base 40 further includes a nut 44, the nut 44 is embedded in the base body 41, and the output electrode 50 is provided with a third connection hole 521. The battery 100 further includes a second fastener (not shown in the drawings), and the second fastener passes through the third connection hole 521 and is in threaded connection with the nut 44, to fix the output electrode 50 to the fixed base 40.

The nut 44 is embedded in the base body 41, so that the nut 44 and the base body41 are firmly connected. The cooperating process of the nut 44 and the base body 41 may be as follows: making the nut 44 fitted with molten plastic (or other insulation material) through a mold, and forming a matching structure of the base body 41 and the nut 44 after the plastic (or other insulation material) solidifies.

It should be pointed out that in the structural composition of the fixed base 40, except for the nut 44 which can be a conductive member, other components of the fixed base 40 are all insulation structures. Only the nut 44 may be electrically connected to the output electrode 50, and the other components are all insulated from the output electrode 50 and the separation beam 30.

In some embodiments, the nut 44 may be in interference fit with the base body 41, so that the nut 44 and the base body 41 are firmly connected. In some embodiments, the nut 44 may also be bonded by an adhersive to the base body 41 to form a whole.

The third connection hole 521 may be a through hole provided in the output electrode 50. When the output electrode 50 is assembled with the fixed base 40, the third connection hole 521 corresponds to the threaded hole of the nut 44 for allowing insertion of the second fastener.

The second fastener is a threaded component. For example, the second fastener may be a bolt, or the second fastener may be a threaded rod.

In order to facilitate the electrical connection between the output electrode 50 and external conductive parts, the second fastener may be a conductive component.

In the above solution, the nut 44 is embedded in the base body 41, enabling stable connection between the nut 44 and the base body 41, so that the second fastener can pass through the third connection hole 521 and be threadedly connected with the nut 44, to make the output electrode 50 fixed to the fixed base 40; and the second fastener fixes the output electrode 50 to the fixed base 40 to facilitate electrical connection between the output electrode 50 and an external conductive part (such as conductive sheet).

Referring to FIG. 6 to FIG. 8, according to some embodiments of the present application, the base body 41 and the connection part 42 are arranged in the second direction Y.

The separation beam 30 extends in the second direction Y, and the base body 41 and the connection part 42 are arranged in the second direction Y, so that the structural space of the separation beam 30 may be used to reduce the space occupied by the fixed base 40 in the first direction, enabling high space utilization rate in the box 10 and further higher energy density of the battery 100.

Referring to FIG. 8, according to some embodiments of the present application, the output electrode 50 includes a first section 51 and a second section 52. The first section 51 and the second section 52 are connected to form an L-shaped structure. The first section 51 is electrically connected to one battery cell 21 (referring to FIG. 4) in the battery cell group 20 (referring to FIG. 3) closest to the separation beam 30, and the second section 52 is fixed to the fixed base 40.

The first section 51 and the second section 52 are two constitution parts of the output electrode 50. The first section 51 may be connected with the second section 52 in various ways. For example, the first section 51 and the second section 52 may be integrally formed, and the second section 52 is bent relative to the first section 51 to form an L-shaped structure, or the first section 51 and the second section 52 may also be welded to form an L-shaped structure.

The first section 51 is electrically connected to one battery cell 21 in the battery cell group 20 closest to the separation beam 30, to facilitate the electrical connection between the output electrode 50 and the battery cell group 20.

The second section 52 is fixed to the fixed base 40 to facilitate connection with external conductive parts.

In the above solution, the first section 51 and the second section 52 are connected to form an L-shaped structure, facilitating the connection of the output electrode 50 with the battery cell group 20 and the fixed base 40 and enabling convenient assembly.

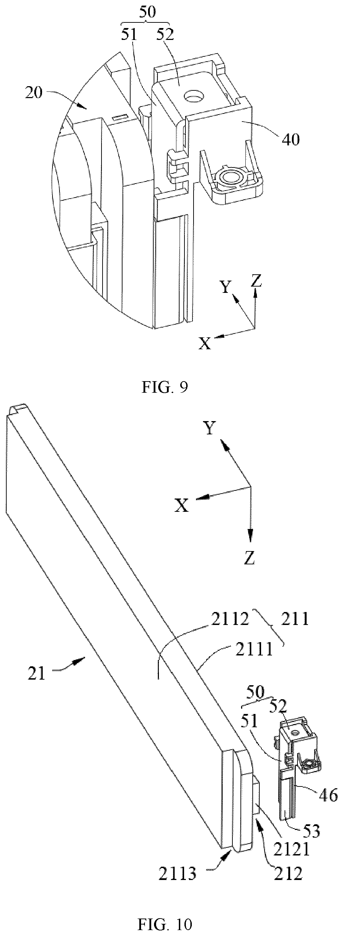

Referring to FIG. 9, FIG. 9 is a schematic diagram showing assembly of the output electrode and the battery cell group provided by some embodiments of the present application, and FIG. 9 does not show the separation beam 30. According to some embodiments of the present application, in the first direction X, the first section 51 is located between the battery cell group 20 and the separation beam 30 (referring to FIG. 3), the length direction of the first section 51 is parallel to the thickness direction Z of the bottom wall 111, and the second section 52 is connected to one end of the first section 51 away from the bottom wall 111.

The first section 51 is located between the battery cell group 20 and the separation beam 30 in the first direction X, reasonably utilizing the space in the first direction X to facilitate the electrical connection between the output electrode 50 and the battery cell group 20.

The first section 51 may extend in the thickness direction Z of the bottom wall 111, and the second section 52 is connected to an end of the first section 51 away from the bottom wall 111 to facilitate the assembly of the fixed base 40 and the separation beam 30.

Referring to FIG. 10, FIG. 10 is a schematic structural diagram of the battery cell and the output electrode provided by some embodiments of the present application. According to some embodiments of the present application, the battery cell 21 includes a housing 211 and an electrode terminal 212. The housing 211 has a first wall 2111 facing the separation beam 30 (referring to FIG. 3). The electrode terminal 212 is installed on the first wall 2111. The electrode terminal 212 has a first side surface 2121. The plane where the first side surface 2121 is located intersects the first wall 2111. The output electrode 50 is connected to the first side surface 2121 of the electrode terminal 212 of one battery cell 21 of the battery cell group 20 (referring to FIG. 3) closest to the separation beam 30.

The housing 211 includes a casing and a cover body. The casing has an opening and the cover body closes the opening to isolate the internal environment of the battery cell 21 from the external environment.

The casing is a component used to cooperate with the cover body to form an internal environment of the battery cell 21, wherein the formed internal environment may be used to accommodate an electrode assembly, an electrolytic solution, and other components. The casing and the cover body may be separate components. The casing may be in various shapes and of various sizes. Specifically, the shape of the casing may be determined by the specific shape and size of the electrode assembly. The casing may be made of a variety of materials, such as copper, iron, aluminum, stainless steel, aluminum alloy, plastic, etc., which is not specially defined in the embodiment of the present application. The embodiments of the present application are introduced by taking the casing in a rectangular parallelepiped shape as an example.

The cover body refers to a component that covers the opening of the casing to isolate the internal environment of the battery cell 21 from the external environment. Without limitation, the shape of the cover body may be adapted to the shape of the casing to fit the casing. Optionally, the cover body may be made of a material with a certain hardness and strength (such as aluminum alloy). In this way, the cover body is less likely to deform when subjected to extrusion and collision, enabling the battery cell 21 to have higher structural strength, and also improved safety performance. Functional components such as electrode terminals 212 may be provided on the cover body. The electrode terminal 212 may be used to be electrically connected with the electrode assembly for outputting or inputting electric energy of the battery cell 21. The cover body may also be made of a variety of materials, such as copper, iron, aluminum, stainless steel, aluminum alloy, plastic, etc., which is not specially defined in the embodiment of the present application. In some embodiments, an insulation structure may be provided inside the cover body, and the insulation structure may be used to isolate the electrical connection part 42 in the casing from the cover body to reduce the risk of short circuit. Exemplarily, the insulation structure may be plastic, rubber, etc.

The battery cell 21 further includes at least one electrode assembly, which is a component in the battery cell 21 where electrochemical reactions occur. One or more electrode assemblies may be contained within the casing. The electrode assembly may be formed by winding or laminating a positive electrode plate and a negative electrode plate, and generally, a separator is provided between the positive electrode plate and the negative electrode plate. The separator is used for separating the positive electrode plate from the negative electrode plate to avoid internal short circuit of the positive electrode plate and the negative electrode plate. The portions of the positive electrode plate and the negative electrode plate that contain active material constitute the main body of the cell assembly, and the portions of the positive electrode plate and the negative electrode plate that do not contain active material constitute respective tabs. The positive electrode tab and the negative electrode tab may be located together at one end of the main body or respectively located at two ends of the main body. During the charging and discharging processes of the battery 100, the positive active material and the negative active material react with the electrolytic solution, and the tabs are connected to the electrode terminals 212 to form a current loop.

The first wall 2111 is a wall of the housing 211 facing the separation beam 30, and the first wall 2111 may be perpendicular to the first direction X. The first wall 2111 may be the cover body, or the first wall 2111 may also be a wall of the casing. Optionally, the first wall 2111 is the cover body, facilitating the assembly of the electrode terminal 212 and the first wall 2111.

The electrode terminal 212 is installed on the first wall 2111. The electrode terminal 212 has a first side surface 2121 and a first end surface. The first end surface is the surface of the electrode terminal 212 facing away from the first wall 2111. The plane where the first side surface 2121 is located intersects the first wall 2111 and the first end surface.

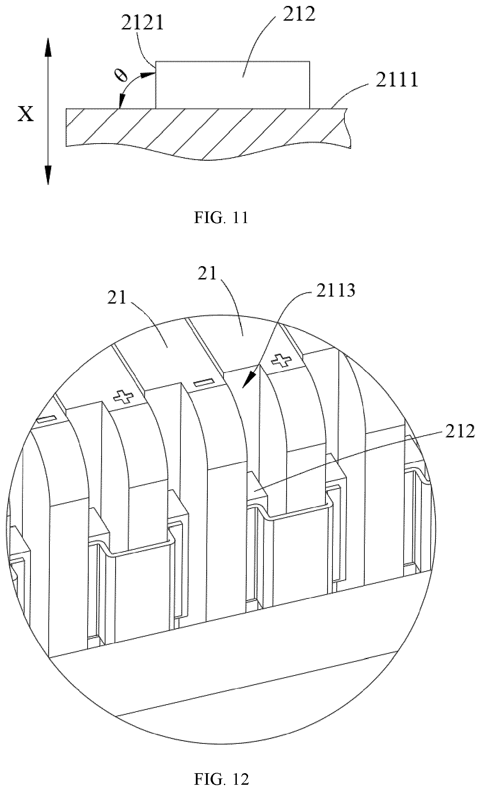

Referring to FIG. 11, FIG. 11 is a schematic diagram showing assembly of a first side surface and a first wall provided by some embodiments of the present application. That the plane where the first side surface 2121 is located intersects the first wall 2111 may be that the plane where the first side surface 2121 is located is parallel to the thickness direction of the first wall 2111, or the plane where the first side surface 2121 is located is obliquely provided relative to the thickness direction of the first wall 2111. For example, the angle θ between the plane where the first side surface 2121 is located and the first wall 2111 is 60°~120°; preferably, the angle θ between the plane where the first side surface 2121 is located and the first wall 2111 is 85°~95°; preferably, the plane where the first side surface 2121 is located may be perpendicular to the first wall 2111, that is, the plane where the first side surface 2121 is located may be parallel to the thickness direction of the first wall 2111, so that the first side surface 2121 is connected with the output electrode 50.

The first side surface 2121 may be welded to the output electrode 50, so that the output electrode 50 is firmly connected to the electrode terminal 212.

In the above solution, the output electrode 50 is connected to the first side surface surface 2121 of the electrode terminal 212. On the one hand, it facilitates the connection between the output electrode 50 and the electrode terminal 212; and on the other hand, it can reduce the space occupied by the output electrode 50 in the first direction X after being assembled with the battery cell group 20, enabling high space utilization rate inside the box 10 and high energy density of the battery 100.

Referring to FIG. 8, according to some embodiments of the present application, the output electrode 50 further includes a third section 53, the third section 53 extends from an edge of the first section 51 in the width direction, the third section 53 is connected to the first side surface 2121, and the width direction of the first section 51 intersects the first direction X.

The width direction of the first section 51 is parallel to the second direction Y.

The angle between the width direction of the first section 51 and the first direction X may be selected according to the actual situation. Optionally, the width direction of the first section 51 is perpendicular to the first direction X.

The third section 53 is a constitution part of the output electrode 50. The third section 53 extends out from the edge of the first section 51 in the width direction. The third section 53 may be formed by bending relative to the first section 51. The third section 53, the first section 51 and the second section 52 may be integrally formed. For example, the output electrode 50 is formed by stamping a metal element.

The extending direction of the third section 53 may be parallel to the first side surface 2121 so that the third section 53 is connected to the first side surface 2121.

The width direction of the first section 51 is perpendicular to the first direction X, the length direction of the first section 51 may be parallel to the thickness direction Z of the bottom wall 111, and the thickness direction of the first section 51 may be parallel to the first direction X. In the first direction X, the size of the first section 51 may be smaller to reduce the space occupied by the output electrode 50.

In the above solution, the third section 53 extends out from the edge of the first section 51 in the width direction, facilitating processing and manufacturing; and the third section 53 is connected to the third surface, facilitating the connection between the output electrode 50 and the battery cell group 20.

Referring to FIG. 7 and FIG. 8, according to some embodiments of the present application, the fixed base 40 includes a first limiting part 45, and the first limiting part 45 abuts against the third section 53 in the thickness direction Z of the bottom wall 111, to limit the movement of the third section 53 in the thickness direction Z of the bottom wall 111.

The first limiting part 45 is a portion of the fixed base 40 for limiting the movement of the third section 53 in the thickness direction Z of the bottom wall 111. For example, the first limiting part 45 has a plane perpendicular to the thickness direction Z of the bottom wall 111, and the plane can be in contact with the third section 53 to limit the movement of the third section 53 in the thickness direction Z of the bottom wall 111. Optionally, the first limiting part 45 is provided on the extension part 46 described below; and optionally, the first limiting part 45 is integrally formed with the extension part 46 described below.

The first limiting part 45 may be in various structural forms. For example, the first limiting part 45 may be a convex part. The convex part is at one side of the third section 53 in the thickness direction of the bottom wall 111. The convex part abuts against the third section 53 in the thickness direction Z of the bottom wall 111; alternatively, the first limiting part 45 may also be in an annular structure, and the third section 53 is provided in the annular structure, with the inner wall of the annular structure abutting against the third section 53 in the thickness direction Z of the bottom wall 111.

When the first limiting part 45 is a convex part, the first limiting part 45 limits the third section 53 in different ways depending on the different positions where the first limiting part 45 is arranged. For example, the first limiting part 45 may limit the movement of the third section 53 toward the bottom wall 111 in the thickness direction Z of the bottom wall 111, or the first limiting part 45 may limit the movement of the third section 53 in a direction away from the bottom wall 111, in the thickness direction Z of the bottom wall 111.

In the above solution, the movement of the third section 53 in the thickness direction Z of the bottom wall 111 is limited by the first limiting part 45, so as to enable stable connection between the output electrode 50 and the fixed base 40 and reduce the risk of the output electrode 50 being detached from the fixed base 40.

Referring to FIG. 7, according to some embodiments of the present application, the first limiting part 45 is located at a side of the third section 53 facing away from the bottom wall 111 (referring to FIG. 3).

The first limiting part 45 is located at one side of the third section 53 away from the bottom wall 111. The first limiting part 45 abuts against the third section 53 in the thickness direction Z of the bottom wall 111, so that the first limiting part 45 limit the movement of the third section 53 in a direction away from the bottom wall 111.

In the above solution, the first limiting part 45 is located at one side of the third section 53 facing away from the bottom wall 111 to limit the movement of the output electrode 50 in the direction away from the bottom wall 111, in the thickness direction Z of the bottom wall 111, and the fixed base 40 is installed on the separation beam 30 and cooperates therewith, constaining the movement of the output electrode 50 in the thickness direction Z of the bottom wall 111, further enabling stable assembly of the output electrode 50 and the fixed base 40. With this arrangement, the output electrode 50 and the fixed base 40 can be assembled in advance to reduce the assembly difficulty.

According to some embodiments of the present application, the housing 211 includes a first wall 2111 and a second wall 2112 oppositely arranged in the first direction X, a third wall (not shown in the drawings) and a fourth wall (not shown in the drawings) oppositely arranged in the second direction Y, and a fifth wall (not shown in the drawings) and a sixth wall (not shown in the drawings) oppositely arranged in the thickness direction Z of the bottom wall 111. The area of the third wall and the area of the fourth wall are both smaller than the area of the first wall 2111. The area of the third wall and the area of the fourth wall are both smaller than the area of the second wall 2112. The area of the fifth wall and the area of the sixth wall are both smaller than the area of the first wall 2111, and the area of the fifth wall and the area of the sixth wall are both smaller than the area of the second wall 2112.

The first wall 2111, the second wall 2112, the third wall, the fourth wall, the fifth wall and the sixth wall are walls that constitute the housing 211, and these walls may enclose a space for accommodating the electrode assembly.

The first wall 2111 and the second wall 2112 are walls of the housing 211 with relatively large areas, the first wall 2111 and the second wall 2112 are arranged oppositely in the first direction X, and multiple battery cells 21 are arranged in the first direction X, so that the battery cell group 20 has a compact structure and the battery 100 has a large energy density.

Referring to FIG. 10 and further FIG. 12, FIG. 12 is a local enlarged view of part C of FIG. 3. According to some embodiments of the present application, the housing 211 further has a second wall 2112 disposed opposite to the first wall 2111, wherein a first region of an edge of the second wall 2112 is recessed to form a second concave part 2113, and the second concave part 2113 is used to accommodate the electrode terminal 212 of the battery cell 21 adjacent to the second wall 212.

The second wall 2112 and the first wall 2111 are arranged oppositely in the first direction X. The first region is a region of the edge of the second wall 2112. In the first direction X, the first region corresponds to the region of the first wall 2111 where the electrode terminal 212 is installed. The first region is recessed in the first direction X, toward the first wall 2111 to form a second concave part 2113.

In some embodiments, the recessing depth of the second concave part 2113 is greater than the height of the electrode terminal 212 protruding from the first wall 2111. It can be understood that it is also possible that only a part of the electrode terminal 212 of the battery cell 21 adjacent to the second wall 2112 is accommodated in the second concave part 2113.

The surface of the second wall 2112 may be provided with an insulation structure, so that when multiple battery cells 21 are stacked, the second wall 2112 is insulated and isolated from the electrode terminal 212 of the adjacent battery cell 21. The insulation structure may also be provided on the surface of the electrode terminal 212 away from the first wall 2111, so that when multiple battery cells 21 are stacked, the electrode terminal 212 may be insulated and isolated from the second wall 2112 of the battery cell 21 adjacent to the first wall 2111.

In the above solution, when the multiple battery cells 21 are stacked, the configuration of the second concave part 2113 enables accommodation of the electrode terminal 212 of the battery cell 21 adjacent to the second wall 2112, making reasonable use of the assembly space, so that the battery 100 has a higher energy density.

Referring to FIG. 7 and FIG. 8, according to some embodiments of the present application, the fixed base 40 includes the base body 41 and an extension part 46 extending from the base body 41 toward the bottom wall 111, and in the first direction X, the extension part 46 is located between the first section 51 and the separation beam 30 (referring to FIG. 3).

The base body 41 is a portion of the fixed base 40 for fixing the second section 52. The second section 52 may be fitted with the base body 41, so that the second section 52 and the base body 41 have a larger connection area.

The extension part 46 is a portion of the fixed base 40 extending out from the base body 41. The extension part 46 and the base body 41 may be integrally formed to facilitate processing and manufacturing.

In the first direction X, the first section 51, the extension part 46 and the separation beam 30 are distributed in sequence, so that the extension part 46 is located between the first section 51 and the separation beam 30, to isolate the first section 51 from the separation beam 30 and reduce the risk of the output electrode 50 being in contact with the separation beam 30. For example, the fixed base 40 may be an insulation member, which can improve the insulation effect between the output electrode 50 and the separation beam 30.

Referring to FIG. 7 and FIG. 8, according to some embodiments of the present application, the fixed base 40 includes a second limiting part 47, and the second limiting part 47 is used to limit the movement of the first section 51 in the width direction of the first section 51.

The second limiting part 47 is a portion of the fixed base 40 for limiting the movement of the first section 51 in the width direction of the first section 51. Optionally, the second limiting part 47 is provided on the extension part 46; and optionally, the second limiting part 47 is integrally formed with the extension part 46.

After the output electrode 50 is assembled with the fixed base 40, the first section 51 cooperates with the second limiting part 47, the second limiting part 47 limits the movement of the first section 51 in the width direction of the first section 51, enabling stable assembly of the output electrode 50 and the fixed base 40.

Depending on the arrangement position, the second limiting part 47 may limit the movement of the first section 51 along one side or two sides of the first section 51 in the width direction. For example, when the second limiting part 47 is a convex part provided at one side of the first section 51 in the width direction, the second section 52 limits the movement of the first section 51 along one side of the first section 51 in the width direction; or when the second limiting part 47 is disposed at two sides of the first section 51 in the width direction, the second limiting part 47 limits the movement of the first section 51 along the two sides of the first section 51 in the width direction.

Referring to FIG. 7 and FIG. 8, according to some embodiments of the present application, the second limiting part 47 includes at least two snaps 471, and the at least two snaps 471 are respectively snap-fitted with two sides of the first section 51 in the width direction.

The at least two snaps 471 are arranged oppositely in the width direction of the first section 51 to form a space for accommodating the first section 51. When the first section 51 is disposed in the space, at least two snaps 471 limit the first section 21 from two sides of the first section 51 in the width direction, respectively.

The number of snaps 471 may be multiple. The plurality of snaps 471 are distributed at two sides of the first section 51 in the width direction. The plurality of snaps 471 may be distributed symmetrically or asymmetrically. For example, it is possible that one snap 471 is distributed at one side of the first section 51 in the width direction, and two snaps 471 are distributed at the other side of first section 51 in the width direction; or as shown in FIGs. 7 and 8, it is possible that the two sides of the first section 51 in the width direction are distributed with one snap 471 respectively.

In an embodiment in which the fixed base 40 includes a base body 41 and an extension part 46 extending from the base body 41, two snaps 471 may be provided on the edges of the extension part 46 along the two sides of the first section 51 in the width direction, so that the extension part 46 and the first section 51 have a larger connection area.

When the first section 51 is snap-fitted with the two snaps 471, the two snaps 471 may also cooperate with the extension part 46 to restrict the movement of the first section 51 in the first direction X.

In the above solution, the configuration of the snaps 471 enables simple structure, which facilitates the assembly of the first section 51 and the second limiting part 47.

According to some embodiments of the present application, the two snaps 471 may be elastically deformed to facilitate snap-fit between the two snaps 471 and the first section 51.

When the first section 51 cooperates with the two snaps 471, the first section 51 may press the two snaps 471 in the first direction X, so that the two snaps 471 deforms to make the distance between the two snaps 471 in the width direction of the first section 51 increase, and the first section 51 enters the space formed between the two snaps 471. After the first section 51 enters the space, the two snaps 471 restore to their original shapes, and the two snaps 471 are respectively snap-fitted with the two sides of the first section 51 in the width direction.

According to some embodiments of the present application, an insulation layer (not shown in the drawings) is provided between the battery cell group 20 and the separation beam 30.

The surface of one battery cell 21, in the battery cell group 20, closest to the separation beam 30 and facing the separation beam 30 may be provided with an insulation layer, or the surface of the separation beam 30 facing the battery cell group 20 may be provided with an insulation layer.

In the above solution, the arrangement of the insulation layer enables a better insulation effect between the battery cell group 20 and the separation beam 30, thereby reducing the risk of short circuit caused by contact between the battery cell group 20 and the separation beam 30.

According to some embodiments of the present application, the present application further provides an electrical device, including at least one battery 100 provided in any of the above embodiments. The battery 100 is used to provide electric energy.

The electrical device may be any of the aforementioned devices or systems using the battery 100.

According to some embodiments of the present application, referring to FIG. 3 to FIG. 12, the present application provides a battery 100. The battery 100 includes a box 10, a battery cell group 20, a separation beam 30, a fixed base 40, an output electrode 50, a first fastener 60 and a second fastener.

The box 10 is in a rectangular parallelepiped shape. The box 10 includes a first sub-box 11 and a second sub-box 12. The first sub-box 11 includes a bottom wall 111 and a side wall 112. The side wall 112 surrounds the bottom wall 111. The second sub-box 12 is disposed at one side of the side wall 112 away from the bottom wall 111, and the first sub-box 11 and the second sub-box 12 are combined/buckled to form an accommodation space. The battery cell group 20, the separation beam 30, the fixed base 40 and the output electrode 50 are all arranged in the accommodation space.

The battery cell group 20 includes a plurality of battery cells 21 stacked in the first direction X and electrically connected to each other. The battery cell 21 includes a housing 211 and an electrode terminal 212. The housing 211 includes a first wall 2111 and a second wall 2112 oppositely arranged in the first direction X, a third wall and a fourth wall oppositely arranged in the second direction Y, and a fifth wall and a sixth wall oppositely arranged in the thickness direction Z of the bottom wall 111. The area of the third wall and the area of the fourth wall are both smaller than the area of the first wall 2111. The area of the third wall and the area of the fourth wall are both smaller than the area of the second wall 2112. The area of the fifth wall and the area of the sixth wall are both smaller than the area of the first wall 2111, and the area of the fifth wall and the area of the sixth wall are both smaller than the area of the second wall 2112. The electrode terminal 212 is installed on the first wall 2111. The electrode terminal 212 has a first side surface 2121. The plane where the first side surface 2121 is located intersects the first wall 2111. A first region of an edge of the second wall 2112 is recessed to form a second concave part 2113, and the second concave part 2113 is used to accommodate the electrode terminal 212 of the battery cell 21 adjacent to the second wall 2112.

The separation beam 30 is disposed on the bottom wall 111. The separation beam 30 is located at one side of the battery cell group 20 in the first direction X; and the separation beam 30 extends in the second direction Y. Any two of the second direction Y, the first direction X and the thickness direction Z of the bottom wall 111 is perpendicular to each other. The separation beam 30 includes a first surface 31 away from the bottom wall 111, and the separation beam 30 is provided with a groove 32 recessed from the first surface 31 toward the bottom wall 111. The groove bottom surface 321 of the groove 32 is provided with a second connection hole 322 and a first concave part.

The fixed base 40 includes a base body 41, a connection part 42, an extension part 46 extending out from the base body 41, and a nut 44; the base body 41 includes a second surface 411 facing the groove bottom surface 321, and the base body 41 and the connection part 42 are arranged in the second direction Y, the extension part 46 extends out from the base 41 in the thickness direction Z of the bottom wall 111, and the thickness direction of the extension part 46 is parallel to the first direction X. The connection part 42 is provided with a first connection hole 421, the first connection hole 421 is corresponding to the second connection hole 322, the first fastener 60 is inserted into the first connection hole 421 and the second connection hole 322, and fixs the fixed base 40 on the groove bottom surface 321. The nut 44 is embedded in the base body 41. The fixed base 40 further includes a first positioning part 43, a first limiting part 45 and a second limiting part 47. The first positioning part 43 is a protrusion protruding from the second surface 411, and the first limiting part 45 is a protrusion provided on the extension part 46. The second limiting part 47 includes two snaps 471, and the two snaps 471 are provided at two sides of the extension part 46 in the second direction.

The output electrode 50 is used to output the electric energy of the battery cell group 20, and the output electrode 50 includes the first section 51, the second section 52 and the third section 53. The first section 51 and the second section 52 are connected to form an L-shaped structure. In the first direction X, the first section 51 is located between the battery cell group 20 and the separation beam 30. The length direction of the first section 51 is parallel to the thickness direction Z of the bottom wall 111, the width direction of the first section 51 is parallel to the second direction Y. The second section 52 is connected to one end of the first section 51 away from the bottom wall 111. The third section 53 extends out from the edge of the first section 51 in the width direction, and the third section 53 is welded to the first side surface 2121 of the electrode terminal 212 of one battery cell 21 in the battery cell group 20 that is closest to the separation beam 30. The second section 52 is provided with a third connection hole 521, and the second fastener passes through the third connection hole 521 and is threadedly connected with the nut 44 to fix the output electrode 50 to the fixed base 40. The first limiting part 45 is located at one side of the third section 53 away from the bottom wall 111. The first limiting part 45 abuts against the third section 53 in the thickness direction Z of the bottom wall 111, so as to limit the movement of the third section 53 in the thickness direction Z of the bottom wall 111. The second limiting part 47 is provided at the extension part 46, the two snaps 2471 are snap-fitted with the two side of the first section 51 in the width direction. The second limiting part 47 is used to limit the movement of the first section 51 in the width direction of the first section 51.

In the above-mentioned battery 100, the output electrode 50 of the battery cell group 20 is fixed on the fixed base 40, and the fixed base 40 is installed on the separation beam 30, which can improve the space utilization rate in the box 10, thereby making the battery 100 have a higher energy density.

Although the present application has been described with reference to preferred embodiments, various modifications may be made and equivalents may be substituted for components thereof without departing from the scope of the present application. In particular, as long as there is no structural conflict, all the technical features mentioned in the various embodiments can be combined in any way. The present application is not limited to the specific embodiments disclosed herein, but includes all technical solutions falling within the scope of the claims.

## Claims

1. A battery, comprising:
a box;
a battery cell group provided in the box, wherein the battery cell group comprises a plurality of battery cells which are stacked in a first direction and electrically connected to each other;
a separation beam fixed in the box, wherein the separation beam is located at one side of the battery cell group in the first direction;
a fixed base installed on the separation beam; and
an output electrode configured to output an electric energy of the battery cell group, wherein the output electrode is fixed to the fixed base.

2. The battery according to claim 1, wherein the box comprises a bottom wall and a side wall, the side wall surrounds the bottom wall, the separation beam is provided on the bottom wall, the separation beam extends in a second direction, and any two of the second direction, the first direction and a thickness direction of the bottom wall intersect each other.

3. The battery according to claim 2, wherein the separation beam comprises a first surface away from the bottom wall, the separation beam is provided with a groove recessed from the first surface toward the bottom wall, and the fixed base is at least partially provided in the groove.

4. The battery according to claim 3, wherein the fixed base does not protrude from the first surface.

5. The battery according to claim 3 or 4, wherein the fixed base comprises a first connection hole, and a groove bottom surface of the groove is provided with a second connection hole corresponding to the first connection hole, the battery further comprises a first fastener, and the first fastener is configured to be inserted into the first connection hole and the second connection hole to fix the fixed base to the groove bottom surface.

6. The battery according to claim 5, wherein the fixed base comprises a base body and a connection part, the output electrode is fixed to the base body, the connection part is connected to the base body, and the first connection hole is provided in the connection part.

7. The battery according to claim 6, wherein the fixed base further comprises a first positioning part, the separation beam comprises a second positioning part corresponding to the first positioning part, and the first positioning part is configured to cooperate with the second positioning part.

8. The battery according to claim 7, wherein the base body comprises a second surface facing the groove bottom surface, the first positioning part is a protrusion protruding from the second surface, and the second positioning part is a first concave part provided at the groove bottom surface.

9. The battery according to any one of claims 6-8, wherein the fixed base further comprises a nut, which is embedded in the base body, and the output electrode is provided with a third connection hole, the battery further comprises a second fastener, and the second fastener passes through the third connection hole and is in threaded connection with the nut to fix the output electrode to the fixed base.

10. The battery according to any one of claims 6-9, wherein the base body and the connection part are arranged in the second direction.

11. The battery according to any one of claims 2-10, wherein the output electrode comprises a first section and a second section, the first section and the second section are connected to form an L-shaped structure, the first section is electrically connected to one battery cell in the battery cell group closest to the separation beam, and the second section is fixed to the fixed base.

12. The battery according to claim 11, wherein in the first direction, the first section is located between the battery cell group and the separation beam, a length direction of the first section is parallel to the thickness direction of the bottom wall, and the second section is connected to one end of the first section away from the bottom wall.

13. The battery according to claim 11 or 12, wherein the battery cell comprises a housing and an electrode terminal, the housing has a first wall facing the separation beam, the electrode terminal is installed on the first wall, the electrode terminal has a first side surface, a plane where the first side surface is located intersects the first wall, and the output electrode is connected to a first side surface of an electrode terminal of the battery cell in the battery cell group closest to the separation beam.

14. The battery according to claim 13, wherein the output electrode further comprises a third section, the third section extends out from an edge of the first section in a width direction thereof, the third section is connected to the first side surface, and the width direction of the first section intersects the first direction.

15. The battery according to claim 14, wherein the fixed base comprises a first limiting part, and the first limiting part abuts against the third section in the thickness direction of the bottom wall, to limit movement of the third section in the thickness direction of the bottom wall.

16. The battery according to claim 15, wherein the first limiting part is located at a side of the third section facing away from the bottom wall.

17. The battery according to any one of claims 13-16, wherein the housing comprises a first wall and a second wall oppositely arranged in the first direction, a third wall and a fourth wall oppositely arranged in the second direction, and a fifth wall and a sixth wall oppositely arranged in the thickness direction of the bottom wall, an area of the third wall and an area of the fourth wall are both smaller than an area of the first wall, the area of the third wall and the area of the fourth wall are both smaller than an area of the second wall, an area of the fifth wall and an area of the sixth wall are both smaller than the area of the first wall, and the area of the fifth wall and the area of the sixth wall are both smaller than the area of the second wall.

18. The battery according to any one of claims 13-17, wherein the housing further has a second wall provided opposite to the first wall, wherein a first region of an edge of the second wall is recessed to form a second concave part, and the second concave part is configured to accommodate an electrode terminal of a battery cell adjacent to the second wall.

19. The battery according to any one of claims 11-18, wherein the fixed base comprises the base body and an extension part extending from the base body toward the bottom wall, and in the first direction, the extension part is located between the first section and the separation beam.

20. The battery according to any one of claims 11-19, wherein the fixed base comprises a second limiting part, and the second limiting part is configured to limit movement of the first section in a width direction of the first section.

21. The battery according to claim 20, wherein the second limiting part comprises at least two snaps, and the at least two snaps are respectively snap-fitted with two sides of the first section in the width direction.

22. The battery according to any one of claims 1-21, wherein an insulation layer is provided between the battery cell group and the separation beam.

23. An electrical device, comprising at least one battery each according to any one of claims 1-22.
